Europäisches Patentamt

European Patent Office

Office européen des brevets

(11) Publication number: **0 197 414**
A2

# EUROPEAN PATENT APPLICATION

(21) Application number: **86104029.3**

(22) Date of filing: **24.03.86**

(51) Int. Cl.⁴: **F 16 D 13/68**

(30) Priority: **04.04.85 IT 2022285**

(43) Date of publication of application:
**15.10.86 Bulletin 86/42**

(84) Designated Contracting States:
**FR GB SE**

(71) Applicant: **S.A.G.A. - SOCIETA' APPLICAZIONI GOMMA ANTIVIBRANTI S.p.A.**
**Via Ripamonti, 88**
**I-20141 Milan(IT)**

(72) Inventor: **Ugazio, Pierangelo**
**Viale Romolo, 6**
**Milan(IT)**

(74) Representative: **Mariani, Giorgio, Dr. et al,**
**INDUSTRIE PIRELLI S.p.A. Direzione Brevetti Piazzale Cadorna, 5**
**I-20123 Milano(IT)**

(54) Elastic disc for friction clutches.

(57) Elastic disc (1) for engaging a clutch, comprising a clutch-disc hub (2), an annular crown (3) provided with friction clutch members (4), an annular intermediate element (5) in-between the clutch-disc hub and crown.

Between the clutch-disc hub and the annular intermediate element, there are interposed two elastic units – formed by elastomeric blocks, with the deformability of the first unit being greater than that of the second unit.

The first unit comprises blocks (6), disposed in a symmetrical position with respect to the disc axis, with having their extremities fixed to the clutch-disc hub and to the intermediate element.

The second unit comprises blocks (7), fixed to the clutch-disc hub and alternated with the blocks of the first unit.

Elastic means (24,25) are also foreseen, in-between the annular intermediate element and the crown.

Fig. 1

ELASTIC DISC FOR FRICTION CLUTCHES

Description

The present invention concerns an elastic disc for engaging a clutch.

As is known, in motor-vehicles, an elastic disc for engaging the clutch comprises mainly - a clutch-disc hub, an annular crown - provided with friction clutch members, and an annular intermediate element between the clutch-disc hub and the crown.

In general, elastic means are foreseen between the clutch-disc hub and the annular intermediate element, and between the annular element and the crown.

Said elastic means allow for having a gradual coupling of the clutch so as to have a progressive transmission of the horsepower, between the engine and the wheel.

In the known solutions, some drawbacks have been verified owing to the fact of the gradualness of the transmission of mechanical torque being entrusted to a group of elastic blocks - on which the elastic deformation is concentrated, with having a consequent rapid fatigue-wear.

A further drawback - in the known elastic discs for clutches, results from the fact of the curve - relative to the mechanical torques and to the deformations of the elastic parts, not having, in its initial stage, per torque (for example, having a value equal to one-twentieth of that under normal conditions), a strong deformation of the elastic parts, and - only successive to this, and when the engine is under way, greater elastic reactions of the blocks.

In practice, it has been verified that the elastic means are too rigid even under the start of driving conditions, or for example, with the clutch engaged and the gear in neutral.

In particular, the fact must also be emphasized, that the motor trans- mission to the wheels, is accompanied by the undesired phenomena of noises.

A first cause of the noise is verified at minimum, with the clutch engaged and the gear in neutral.

This noisiness is mainly due to the oscillations of inertial torque of the motor organs in motion, that translate into a rattling of the teeth in the gears, when changing speeds.

Further causes of noisiness, are had when the car is running - in particular, in cases when the motor is under torque with a non-relevant speed.

This noisiness is due to the resonance phenomenon of the entire system.

What also contribute to this resonance, are the masses of the system - due to the motor, to the gear, to the differential transmission and to the wheels, and the elasticity of the system due to the center of friction, to the transmission-shaft, to the driving-shafts.

Still another cause of noisiness, is determined by the impact of the elastic parts of the friction clutch-disc - against its end-of-course limit whenever a rough application of the mechanical torque, is verified.

The aim of the present invention is an elastic disc for engaging the clutch, which is devoid of all those drawbacks that were previously cited.

The object of the present invention is an elastic-disc for engaging the clutch, which comprises a clutch-disc hub having its axis at the centre of the disc, an annular crown provided with friction clutch members, an annular intermediate element - between the clutch-disc hub and the crown, first elastic means - between the clutch-disc hub and the annular intermediate element, second elastic means - between the annular intermediate element and the crown, characterized by the fact that the first elastic means comprise two elastic units provided with elastomeric blocks that react elas- tically to the forces of deformation, said blocks - of the two units being equal in number, and with the blocks of each unit being disposed in a symmetrical position, with respect to the central axis of the clutch-disc hub, and alternative to that of the other unit, the blocks of the first unit being disposed with their extremities fixed rigidly to the clutch-disc hub and to the intermediate element, the blocks of the second unit being fixed to the clutch-disc hub, with an air-gap being foreseen between the blocks of the second unit and suitable raised ridges along a surface of the annular intermediate element, the deformability of the blocks of the first unit being greater than the deformability of the blocks of the second unit and of the elastic means - between the annular element and the crown, the deformability of the blocks of the second unit being greater than that of the said elastic means.

The present invention, will be better understood from the following detailed description, made solely by way of non-limiting example, with referring to the figures of the attached drawings, wherein:

FIG. 1 - shows a frontal view of the elastic disc for engaging the clutch, comprising a clutch-disc hub, an annular intermediate element and a crown with the clutch members.

FIG. 2 - shows a transversal cross-section of FIG. 2, along the line II-II.

FIG. 3 - shows a frontal view of a detail of FIG. 1, without the friction clutch members of the annular crown.

FIG. 4 - shows a view of FIG. 1 - after removing the clutch-disc hub.

FIG. 5 - shows a transversal cross-section of FIG. 4 - along the line V-V.

FIG. 6 - shows a detail of the slot in the rubber rings of the annular crown, around the coupling pins that connect the opposite flanges of the annular intermediate element.

FIG. 7 - shows a transversal section of FIG. 1, along the line II-II.

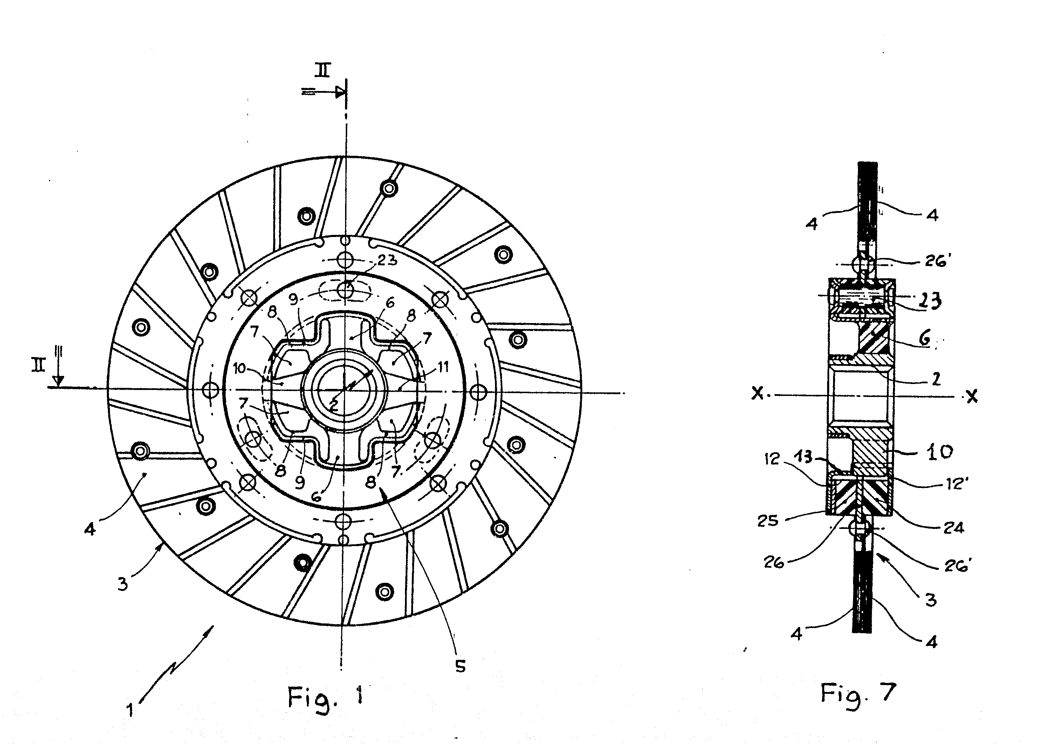

In FIG. 1 - and in the complete transversal cross-section of FIG. 7, there is shown an elastic disc 1 for engaging the clutch, which comprises a clutch-disc hub 2 - with its axis X-X being at the centre of the disc, an annular crown 3 - provided with friction clutch members 4, an annular intermediate element 5 - between the clutch disc hub and the crown, first elastic means - between the clutc-disc hub and the annular intermediate element, second elastic means between the annular element and the crown.

The first elastic means comprise two units provided with elastomeric blocks that react elastically to the forces of deformation.

The elastomeric blocks of the two units, are of an equal number and the blocks of each unit are disposed in a

0197414

symmetrical position with respect to the central axis of the clutch-disc hub, and they are alternated with those of the other unit.

Again in the same preferred solution of the invention, the blocks 7 of the second unit are two in number, disposed at 90° - with respect to those of the first unit, and fixed to the clutch-disc hub.

Between the blocks of the second unit and the special raised ridge surfaces 9 - of the annular intermediate element, an air-gap 8 is foreseen.

In all the solutions of the invention, the deformability of the blocks of the first unit - is greater than the deformability of the blocks of the second unit and of the elastic means that are interposed between the annular intermediate element and the crown.

From here onwards, the term 'deformability of the blocks' - is intended to indicate the fact that the blocks of the two units are elastically flexible - i.e. they react elastically, with a contrasting pair, to the mechanical torque that is imposed on them.

More precisely, in the present solution it is had that the blocks 6 - of the first elastic unit, are made of natural rubber and they react elastically, with a mechanical torque - between the clutch-disc hub and crown, comprised between the range of one-tenth and one-twentieth of the torque under normal conditions, that acts on the elastic disc when the vehicle is running.

More particularly, in the preferred solution, the blocks 6 have a low rigidity and, when they are deformed, they react with very low mechanical torques - for example, in the order of 5:100(Kgm:rotation degree); whereas the torques transmitted, under normal conditions, to the elastic disc are in the order of 2(Kgm:rotation degree).

For preference, even the elastic blocks of the second unit are made of natural rubber - and the hardness of the elastic blocks of the first and of the second units, is of about 50° Shore-A hardness.

In the form shown in FIGS. 1, 2 and 7, the clutch-disc hub comprises two arm-like extensions 10, 11, upon which the blocks 7 are rigidly fixed with a rubber-to-metal connection.

As can be seen from the top-view of FIG.1, the blocks 7 are disposed with their dimensions equal - in respect of the axis of each of said arms.

Therefore, the air-gap 8 is equal all the same - no matter whether it lies in one rotation direction of the clutch-disc hub, or in the other.

The annular intermediate element 5, will now be described in detail, the conformation of which is chosen both, by fixing the blocks 6 of the first unit as well as by determining the degree of compressibility of the blocks 7 of the second unit, of the first elastic means.

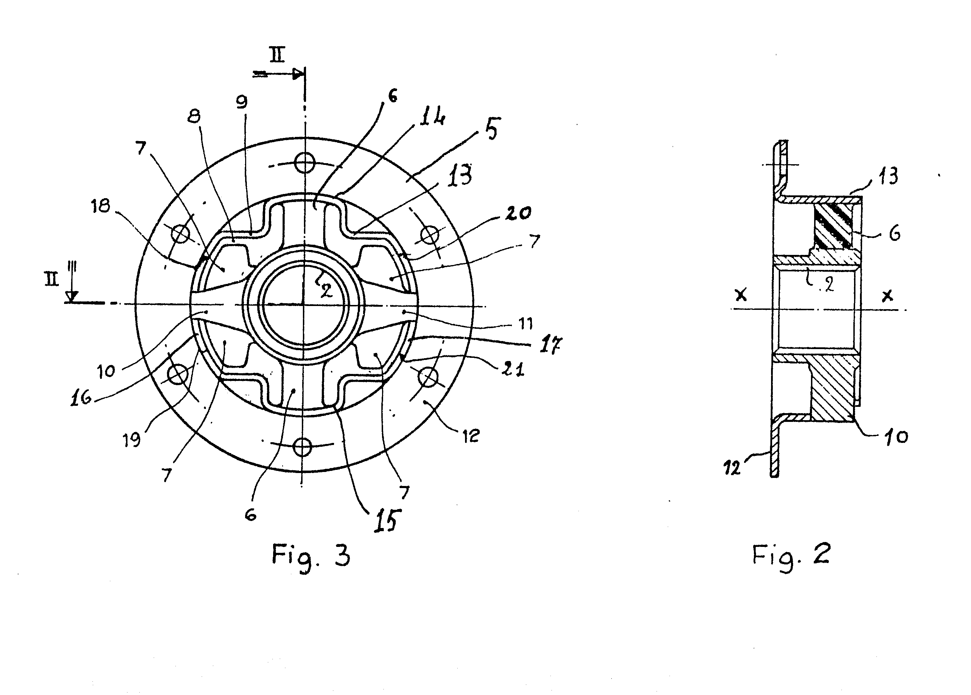

The annular intermediate element 5 comprises (FIGS. 2 and 3) a base flange 12, from which there cantilevers out a sleeve 13 of a substantially cross-like form, with two diametrically opposed hollows 14 and 15, and two apertures 16 and 17 that are disposed at 90° with respect to the hollows.

The elastic blocks 6 are fixed at the base of the hollows, by means of a rubber-to-metal connection.

In the space inside the apertures, there can rotate - in one sense or in the other, the clutch-disc hub arms 10 and 11 - to which the blocks 7 are connected.

The extremities 18 and 19 - that delimit the walls of the aperture 16, and the extremities 20 and 21 - that delimit the walls of the aperture 17, form the end-of-course limit for the shifting of the blocks 7 transported by the diametrically opposed arms, disposed in the clutch-disc hub.

In practice, the extremities of the apertures comprise a stop-ledge for the radially outermost metallic tips of the arms 10 and 11 disposed in the clutch-disc hub.

Said ends of the apertures, obstaculate any further elastic deformation of the blocks 7 - that are already compressed between the same arms and the raised-ridge surfaces 9 of the annular intermediate element, whenever the transmission of torque is had - between the clutch-disc hub and the annular intermediate element.

The connection - between the annular intermediate element 5 and the crown of the elastic disc, will now be described.

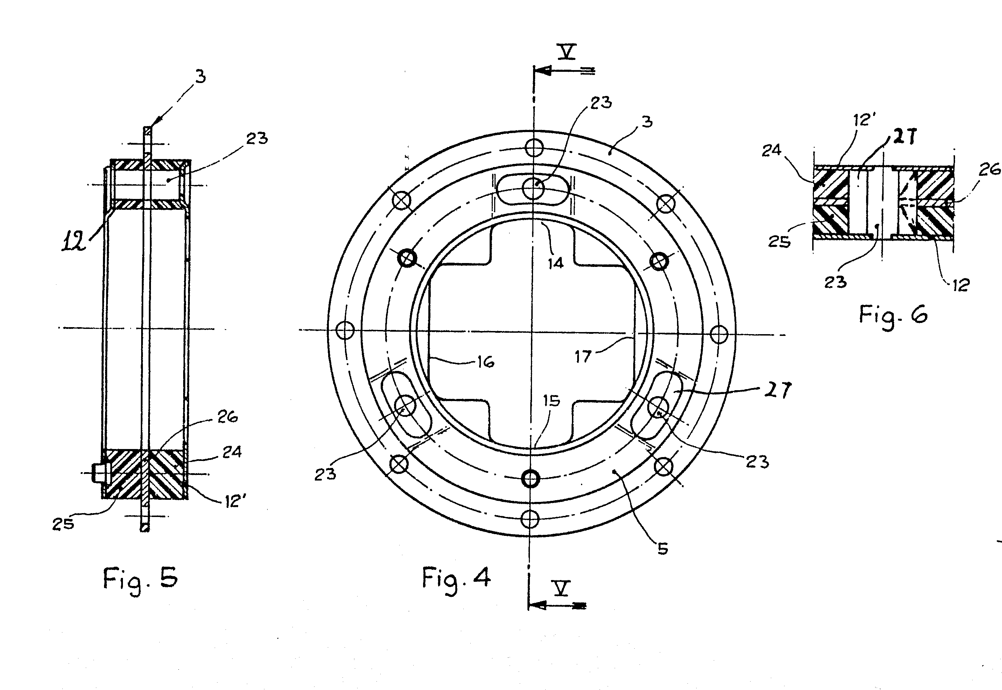

To this purpose, the annular intermediate element comprises a plurality of pins 23, cantilevered from the first flange 12 - for example, three pins disposed at 120° to one another, connected to an upper flange 12' - with the interpositioning of elastic means that are foreseen between the annular intermediate element and the crown 3 (FIGS. 4 and 5).

Said elastic means, in-between the annular intermediate element and the crown, comprise two rubber rings 24, 25, (see FIG. 5), each one contacting the inner surfaces of the flanges 12 and 12'.

Between the rubber rings 24 and 25, there is interposed, with a rubber- to-metal connection, a slab 26 that, in its turn, is connected by riveting, or by similar means indicated by 26', to a supporting surface of the friction clutch members 4 of the crown 3 (FIG. 7).

According to the characteristic of the invention, the rubber rings have a degree of rigidity that is relatively greater than that of the first and the second elastic units.

In practice, the rubber rings 24 and 25 are less flexible and they are preferably realized out of natural rubber having à Shore-A hardness of 75°.

Still preferentially, as indicated in the sketch of FIG. 6, between the rubber rings 24 and 25 and the pins 23, there are realized the slots 27 - visible as a whole, in their entire extension in FIG. 4, and with a broken- line in FIG. 1.

The width of the said slots, limits the angular shifting of the rubber relative to the pins 23, with forming a stop-limit apt for preventing tears in the elastomeric material of the elastic means interposed between the annular element and the crown whenever - under torque, these are subjected to shearing stress.

There will now be described the functioning of the elastic disc 1, from which all the pre-fixed aims will result as being achieved.

Under the conditions - with the clutch engaged and the gear in neutral, since the wheels must not move, the mechanical torque in play - is practically and solely, that transmitted by the engine for moving the fly-wheel.

In such a situation, the load - between crown 3 and clutch-disc hub 2, is transmitted entirely through the blocks 6 (FIG. 1) of the first elastic unit. The characteristic of low rigidity of the blocks 6, allows for having a great deformation of the same - and hence, the capacity for absorbing the entire load.

Again under this load situation, the elastic blocks 6 - in being rigidly connected - between the clutch-disc hub 2 and the annular intermediate element 5, practically isolate the engine, at minimum from the rest of the chain of organs, by eliminating the disturbing noises associated with the solution of the state of the art.

In practice, with the low dinamic rigidity of the blocks 6 there is obtained a torque-deformations curve which results considerably flattened in correspondence of the abscissa axis where deformations are indicated.

Hence, it can be said that - with the low rigidity blocks 5, a perfect adjustment is had of the elastic disc with the low conditions of load.

Moreover, it is evident that with the cited solution, the elastic means comprised by the two rubber rings 24 and 25 (FIG. 7) and so also the second elastic unit comprised by the blocks 7 - do not work and hence, they are saved from mechanical stresses at the starting phase of disc functioning.

When the torque to be transmitted increases, the blocks 7 (FIG. 1) re- annul the air-gap 8 - and there is had: firstly, the compression of the blocks 7 - between the arms of the clutch-disc hub and the stop-limit surfaces 9 of the annular intermediate element; next, the definite impact of the blocks 7 when there is verfied the end-of-course limit - between the arms of the clutch-disc hub and the ends, that delimit the apertures 16 and 17 - made on the annular intermediate element 5.

During this phase, a favourable union is obtained, between the initial phase and the successive one - wherein must work the elastic rings 24 and 25 - that are interposed, between the flanges 12 and 12' of the annular intermediate element 5 (FIG. 7).

In practice, with this solution, there are obviated all those noises caused by the impact of the elasticized part of the clutch disc against the stop-limit - when torques were applied roughly, which resulted in a very rapid deformation of the central spring in the friction centre.

When the blocks 7 are short-circuited, and when there is an increase in the torque values to be transmitted, there intervene the elastic rings 24 and 25, which are interposed between the flanges 12 and 12' of the annular intermediate element (FIG. 7) with shear strain - till it stops on pins 23 just as is shown with a broken-line in FIG. 6.

During this phase, the transmission of maximum torque, between engine and wheels, is assured - owing to the fact of the rubber rings 24 and 25 being disposed between the flanges 12 and 12' in a considerable quantity - and having, as has already been stated, a characteristic of high rigidity.

It is evident moreover, how - with having made the characteristics of elasticity of the blocks 7 of the second unit and of the rubber rings 24 and 25 independent from the characteristics of the blocks 6 - which are the first to intervene, this allows for adopting, for the first, rubber that has a sufficient degree of dampening, for eliminating the causes of the noisiness due to the resonance phenomenon which were encountered in the solutions of the past.

Furthermore, it results as being evident how the sub-division of the working-loads, in the transmission of torque, into three successive stages, allows for sub-dividing the overall elastic deformation into three distinct parts, with reducing the mechanical stresses on each part - and having as a consequence, a greater service-life for the elastomeric material.

Moreover, although there have been described some particularly advantageous forms for realizing the invention, it must also be kept in mind that within the ambit of protection of this patent there are also included all those alternative variations - derived from the given inventive principle, that are accessible to the one skilled in the art.

For example, instead of having two blocks 6 and 7 (FIG. 1), for each unit of the elastic means - that are interposed between the clutch-disc hub and the annular element, it is also possible to foresee a greater number of blocks for each unit - provided that the blocks of each unit are of an equal number; in particular, the first elastic unit could comprise three blocks disposed at 120° to one another - with respect to the central axis of the clutch-disc hub, with always fixing each block between the clutch- disc hub and the annular element placed opposite.

In this situation, the elastic means of the second unit - interposed between the clutch-disc hub and the annular element, are formed by three blocks disposed, at 120° from one another, on three arms of the clutch-disc hub.

Finally, it could be foreseen to vary the dimensions of the air-gap 8 (FIG. 1) with rendering the position of each block 7 to be asymmetrical - relative to the axis of the arm 10 or 11, respecting which it is fixed.

WHAT IS CLAIMED

1.      Elastic-disc (1) for engaging a clutch, which comprises a clutch-disc hub (2) having its axis at the centre of the disc, an annular crown (3) - provided with friction clutch members (4), an annular intermediate element (5) - between the clutch-disc hub and the crown, first elastic means, between the clutch-disc hub and the annular intermediate element, second elastic means, between the annular intermediate element and the crown, characterized by the fact that the first elastic means comprise two elastic units - provided with elastomeric blocks that react elastically to the forces of deformation, said blocks - of the two units being equal in number, and with the blocks of each unit being disposed in a symmetrical position, with respect to the central axis of the clutch-disc hub, and alternative to that of the other unit, the blocks (6) of the first unit being disposed with their extremities fixed rigidly to the clutch-disc hub and to the intermediate element, the blocks (7) of the second unit being fixed to the clutch-disc hub, with a rigid air-gap (9) being foreseen, between the blocks of the second unit, and suitable raised ridges along a surface of the annular intermediate element, the deformability of the blocks of the first unit being greater than the deformability of the blocks of the second unit and of the elastic means - between the annular element and crown, the deformability of the blocks of the second unit being greater than that of the said elastic means.

2.      Elastic-disc for engaging a clutch, characterized by the fact that said blocks of the first elastic unit, are made of natural rubber and they react with a mechanical torque, between the clutch-disc hub and crown, comprised in the range of values of one-tenth and one-twentieth of the torque acting, under normal conditions, on the elastic disc when the vehicle is running.

3. Elastic-disc for engaging a clutch, as in CLAIMS 1 or 2, characterized by the fact that the rubber of the elastic blocks in the first and the second units, is substantially of a hardness of about 50° Shore-A.

4. Elastic-disc for engaging a clutch as in any whatsoever of the previous Claims, characterized by the fact that the clutch-disc hub comprises radial extensions (10, 11) - on which there are solidly inserted the blocks of the second unit.

5. Elastic-disc for engaging a clutch, as in CLAIM 1, characterized by the fact that the stop-limit surface - in-between the blocks of the second elastic unit and the annular intermediate element, are realized over a sleeve (13) that exits in cantilever fashion, from a flange (12) of the said annular intermediate element.

6. Elastic-disc for engaging a clutch, as in Claim 5, characterized by the fact that said sleeve is provided with apertures (16, 17) inside which the arms (10, 11) of said clutch-disc hub, can oscillate.

7. Elastic-disc for engaging a clutch, as in CLAIM 6, characterized by the fact that the extremities (18, 19) and (20, 21) of said apertures, limit the width of the arm oscillations of the clutch-disc hub in both the rotation directions, for a value corresponding to which the blocks of the second unit, are compressed between the arms of the clutch-disc hub and the stop-limit surface of the intermediate element and in correspondence of the oscillation angles - exceeding said value the two elastic units do not transmit any further mechanical torques between crown and clutch-disc hub, said rotation limiting value of the clutch- disc hub being that of the interference of the elastic means interposed between the crown and the annular intermediate element.

8.　　　Elastic-disc for engaging a clutch, as in CLAIM 1, characterized by the fact that said annular intermediate element comprises a first flange, a plurality of pins (23) exiting, in cantilever fashion, from the first flange, a second flange (12') at a distance opposite said first flange, with there being interposed between said flanges, elastic means in-between crown and annular intermediate element.

9.　　　Elastic-disc for engaging a clutch, as in CLAIM 8, characterized by the fact that said elastic means comprise two rubber rings (24, 25), each one of said rings being in contact with, and compressed by said flanges, with a slab (26) of said crown, being interposed between the said rubber rings.

10.　　　Elastic-disc for engaging a clutch, as in CLAIM 9, characterized by the fact that each rubber ring comprises, in the circumferential sense, special slots around the said joining-pins - in-between the two flanges of the annular intermediate element, the width of these slots limiting the deformation of the elastic means between the annular intermediate element and crown.

Fig. 1

Fig. 7

Fig. 3

Fig. 2

5.33 90

Fig. 5

Fig. 4

Fig. 6